# EUROPÄISCHE PATENTSCHRIFT

(11) **EP 0 595 965 B1**
(45) Veröffentlichungstag und Bekanntmachung des Hinweises auf die Patenterteilung: **14.12.1994**
(21) Anmeldenummer: 92916243.6
(22) Anmeldetag: 21.07.1992
(51) Int. Cl.: B65D 81/02, B65D 81/08

(54) **MEHRWEGCONTAINER ZUR VERPACKUNG VON GÜTERN ALLER ART**
REUSABLE CONTAINER FOR PACKING GOODS OF ALL KINDS
CONTENEUR REUTILISABLE POUR L'EMBALLAGE DE TOUTES SORTES DE MARCHANDISES

(30) Priorität: 23.07.1991 EP 91112361
(43) Veröffentlichungstag der Anmeldung: 11.05.1994
(73) Patentinhaber: Siemens Nixdorf Informationssysteme Aktiengesellschaft, 33102 Paderborn (DE); PUBLICIS MCD WERBEAGENTUR GmbH, 81369 München (DE)
(72) Erfinder: LUPLOW, Werner, D-8901 Kissing (DE); MAYER, Anton, D-8900 Augsburg (DE); SPECHT, Günter, D-8000 München 21 (DE)
(74) Vertreter: Fuchs, Franz-Josef, Dr.-Ing.
(86) Internationale Anmeldenummer: EP9201663
(87) Internationale Veröffentlichungsnummer: WO9301992

(56) Entgegenhaltungen:
- FR-A- 1 482 435
- FR-A- 2 601 655
- US-A- 3 941 300
- US-A- 4 294 358
- US-A- 4 860 894

## Beschreibung

Die Erfindung betrifft einen Mehrwegcontainer zur Verpackung von Gütern aller Art, bestehend aus einer Deck- und einer Bodenwanne mit jeweils einer auf den Innenseitenrändern rundum verlaufenden Rille und einem die Seitenwände bildenden, nach Gebrauch zusammenfaltbaren Ring, der während des Gebrauchs in die rundum laufenden Rillen der beiden Wannen einsteckbar ist, sowie Mitteln zum Zusammenhalten der drei Teile während des Gebrauchs.

Aus einem Prospekt der Firma Kayserberg Packaging S.A. in Kühnheim, Frankreich, sind bereits Mehrwegcontainer bekannt, die aus einer Deck- und einer Bodenwanne, vorzugsweise aus Polypropylen, und einem die Seitenwände bildenden, zusammenfaltbaren Ring aus Pappe bestehen. Zum Zusammenhalten der drei Teile dienen dabei jeweils an den Seitenrändern der Boden- und der Deckwanne angebrachte Verschlüsse. Im zusammengeklappten Zustand schließen die umlaufenden Ränder von Deckel und Bodenwanne ineinander und schützen somit den innenliegenden Karton. Eine feste Verbindung von Deckel und Bodenwanne ist dabei jedoch nicht vorgesehen, so daß bei unachtsamer Handhabung die Einzelteile auseinanderfallen können. Nachteilig bei diesem bekannten Mehrwegcontainer ist ferner, daß das Packgut nur durch Füllmaterial fixiert werden kann, das nach dem Gebrauch als Abfall anfällt. Außerdem läßt sich durch diese Art der Fixierung des Packgutes keine ausreichende Rutschfestigkeit desselben erreichen, so daß eine erhöhte Gefahr von Transportschäden vor allem bei empfindlichem Packgut besteht.

Aufgabe der vorliegenden Erfindung ist es, einen Mehrwegcontainer zur Verpackung von Gütern aller Art, insbesondere von empfindlichen elektronischen Geräten zu schaffen, der eine sichere und rasch lösbare Verbindung seiner Einzelteile sowie eine zeitsparende und rutschfeste Fixierung des Packgutes vor und eine leichte Lösbarkeit dieser Fixierung nach dem Transport bei gleichzeitig hoher Sicherheit des Packgutes vor Schädigung während des Transportes gestattet.

Diese Aufgabe wird durch die kennzeichnenden Merkmale des Patentanspruchs 1 gelöst.

Durch diese Maßnahmen erhält man einen Mehrwegcontainer, der auch für empfindliches Packgut, wie z.B. elektronische Geräte, besonders gut geeignet ist. Das Packgut ist dabei rutsch- und stoßfest verpackt, die Verpackung selbst einfach durchführbar frei von unnötigen Abfällen.

Weitere vorteilhafte Ausgestaltungen sind aus den Unteransprüchen entnehmbar.

Anhand der Ausführungsbeispiele nach den FIG 1 bis 40 wird die Erfindung näher erläutert. Es zeigen
FIG 1 eine schematische Darstellung des Mehrwegcontainers,
FIG 2 eine perspektivische Darstellung mehrerer Mehrwegcontainer unterschiedlicher Größe,
FIG 3 eine perspektivische Darstellung zweier übereinander anordenbarer Mehrwegcontainer,
FIG 4a die Draufsicht auf den unteren Container nach FIG 3,
FIG 4b die Draufsicht auf die Bodenoberfläche des oberen Containers nach FIG 3,
FIG 5 eine perspektivische Darstellung der Bodenwanne mit fixiertem Packgut,
FIG 6 eine perspektivische Darstellung eines Teilausschnitts aus der Oberfläche der Bodenwanne mit Befestigungsbügel,
FIG 7 eine Draufsicht einer Bodenwanne,
FIG 8 die Längsseitenansicht der Bodenwanne nach FIG 7,
FIG 9 ein erste Schnitt durch die Bodenwanne nach FIG 7,
FIG 10 ein zweiter Schnitt durch die Bodenwanne nach FIG 7,
FIG 11 eine Draufsicht auf die Unterseite der Bodenwanne,
FIG 12 eine Seitenansicht auf die Draufsicht der Bodenwanne von unten
FIG 13 ein erster Schnitt durch die Bodenwanne nach FIG 11,
FIG 14 ein zweiter Schnitt durch die Bodenwanne nach FIG 11,
FIG 15 Vorder-, Seitenansicht und Draufsicht eines Ringes,
FIG 16 ein Griff in mehreren Ansichten,
FIG 17 einen Teilquerschnitt durch die Bodenwanne,
FIG 18 eine schematische Draufsicht und eine Seitenansicht der Bodenwanne mit Gummistreifen am Aufsatzplatz des Packgutes,
FIG 19 eine schematische Darstellung der Draufsicht und der Seitenansicht einer Bodenwanne mit Höckern am Aufsatzplatz des Packgutes,
FIG 20 eine schematische Darstellung der Draufsicht auf die Bodenwanne mit quaderförmig ausgebildeten Vertiefungen zur Aufnahme von Spannschnappern zur Befestigung der Innengurte,
FIG 21 einen Querschnitt durch eine quaderförmige Vertiefung mit eingerastetem Spannschnapper,
FIG 22 eine schematische Darstellung der Seitenansicht eines eingerasteten Haltebügels für die Innengurte,
FIG 23 einen Teilquerschnitt durch die Bodenwanne mit einem Steg zur Befestigung der Innengurte,
FIG 24 eine weitere Ausgestaltung zur Befestigung der Innengurte mit Gleitschiene und Gleitstein,
FIG 25 eine Kontrollvorrichtung zur Erkennung der Gurtspannung der Innengurte,
FIG 26 eine perspektivische Darstellung der Deckwanne mit Aussengurten zum Zusammenhalten der drei Containerteile,
FIG 27 eine perspektivische Darstellung der Deckwanne mit Schiebeverschlüssen zum Zusammenhalten der drei Containerteile untereinander,
FIG 28 eine perspektivische Gesamtdarstellung eines Containers mit Schiebeverschlüssen,
FIG 29 eine perspektivische Darstellung eines Details des Schiebeverschlusses,
FIG 30 eine perspektivische Darstellung des Rings für eine Ausführung mit Schiebeverschlüssen,
FIG 31 eine perspektivische Darstellung eines zusammengeklappten Rings nach FIG 20,
FIG 32 eine perspektivische Darstellung einer weiteren Ausgestaltung des Zusammenhalts der drei Containerteile mit Hilfe eines Bügels,
FIG 33a einen Querschnitt durch die Verriegelung nach FIG 22,
FIG 33b einen Querschnitt durch die Verriegelung nach FIG 22 zur Befestigung von Deck- und Bodenwanne nach dem Gebrauch,
FIG 34 eine perspektivische Darstellung einer Verriegelung mit Hilfe einer Stange,
FIG 35 ein Querschnitt durch eine Verriegelung mittels Einsprengung,
FIG 36 ein Querschnitt durch eine Verriegelung mittels einer Schiebeleiste,
FIG 37 eine Draufsicht auf einen Ausschnitt auf die Bodenwanne mit Klemmstegen zur Aufnahme der Dämpfungseinlage,
FIG 38 eine weitere Möglichkeit zur Aufnahme der Dämpfungseinlage mittels Klettprinzip,
FIG 39 eine schematische Darstellung in Querschnittform durch zwei übereinander angeordnete Container mit Packgut,
FIG 40 ein Querschnitt durch einen zusammengeklappten Container nach Gebrauch.

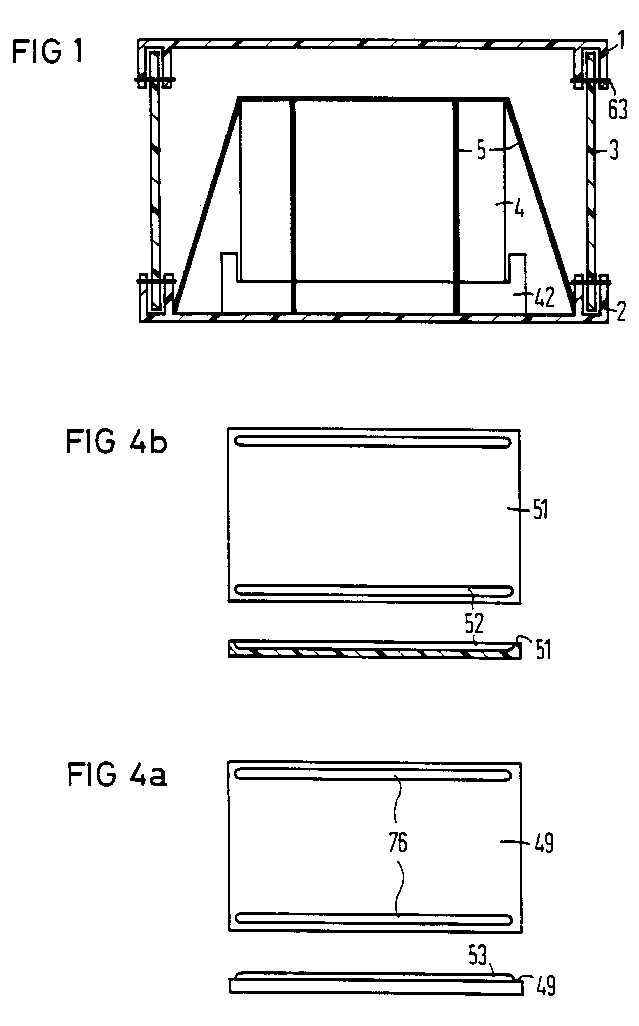

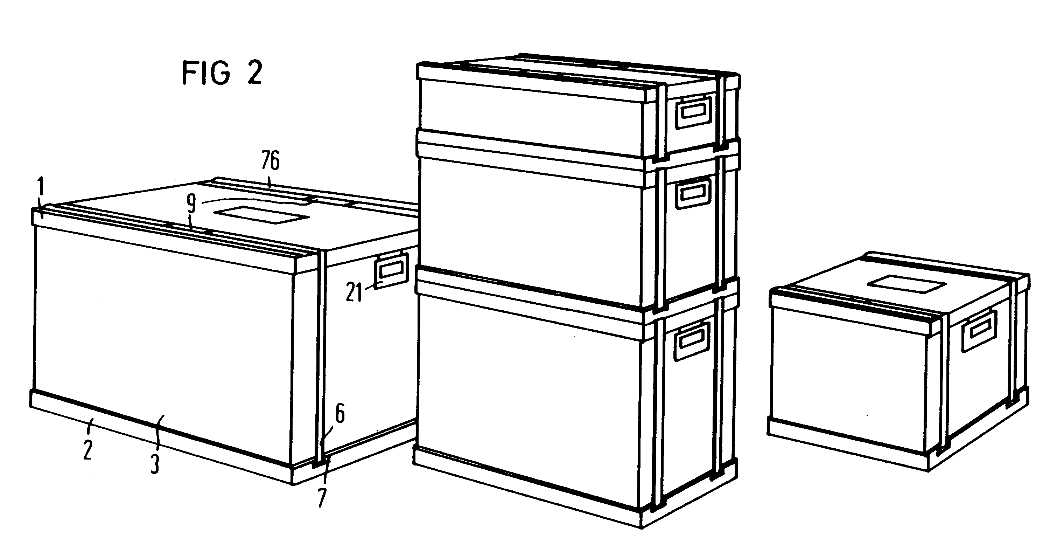

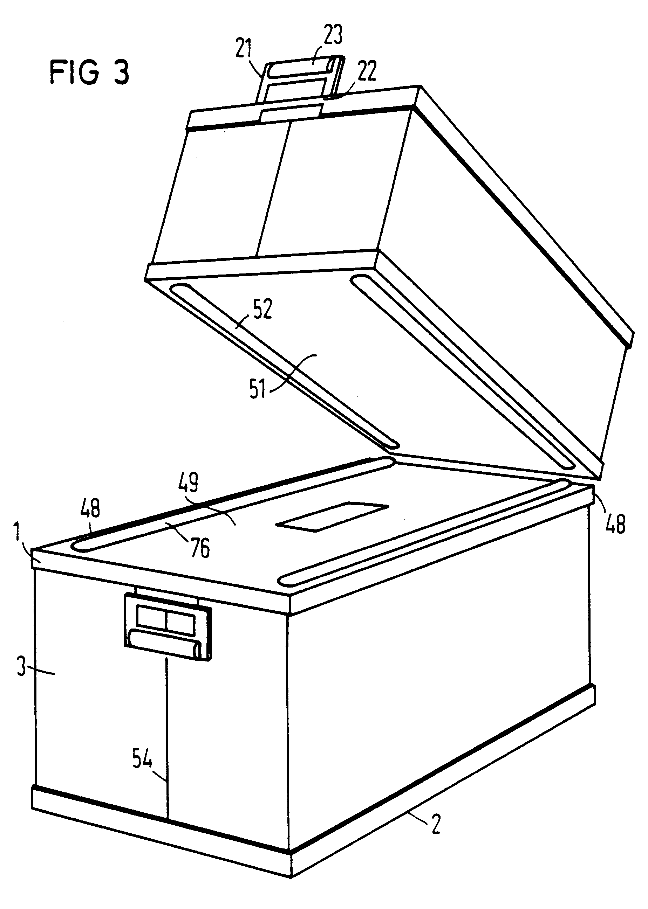

Der Mehrwegcontainer besteht, wie in FIG 1 schematisch dargestellt, aus drei Teilen, nämlich der Deckwanne 1, der Bodenwanne 2 und dem dazwischenliegenden Ring 3. Auf der Bodenwanne sind eventuell, wie später noch ausgeführt, Haltemöglichkeiten zur Aufnahme einer Dämpfungseinlage 42 sowie von Innengurten 5 vorgesehen, die das Packgut 4 verrutschfest während des Transports fixieren. Für das Zusammenhalten der drei Teile sind mehrere Ausgestaltungen 63, die ebenfalls später noch erörtert werden, möglich.

Die Mehrwegcontainer können in unterschiedlicher Breite und Höhe ausgeführt werden, wie in FIG 2 dargestellt. Diese Mehrwegcontainer lassen sich auch übereinander stapeln, wobei jeweils an der Außenseitendeckfläche 49 der Deckwanne 1 Kunststoffleisten 76 mit einer gewölbten Oberfläche angeordnet sind, die parallel der beiden Längsseiten 48 der Deckwanne 1 verlaufen. An den entsprechenden Stellen der Bodenwannenaußenoberfläche 51 sind Rinnen 52 vorgesehen, die in ihrem Profil als Negativ zum Profil der Kunststoffleisten 76 ausgebildet sind, so daß bei übereinanderstellen zweier Container die Oberfläche der Kunststoffleisten 76 in den Rillen 52 liegen und damit eine verrutschsichere Stapelung mehrerer Container übereinander gewährleisten.

Das Zusammenwirken der Außenseitendeckfläche 49 der Deckwanne 1 und der Bodenwannenaußenoberfläche 51 der Bodenwanne 2 sind in den FIG 4a und 4b dargestellt, wobei FIG 4a eine Draufsicht auf die Außenseitendeckfläche 49 der Deckwanne 1 und eine dazugehörige Seitenansicht zeigt, während in FIG 4b die Draufsicht auf die Bodenwannenaußenoberfläche von unten her dargestellt ist sowie der dazugehörige Querschnitt.

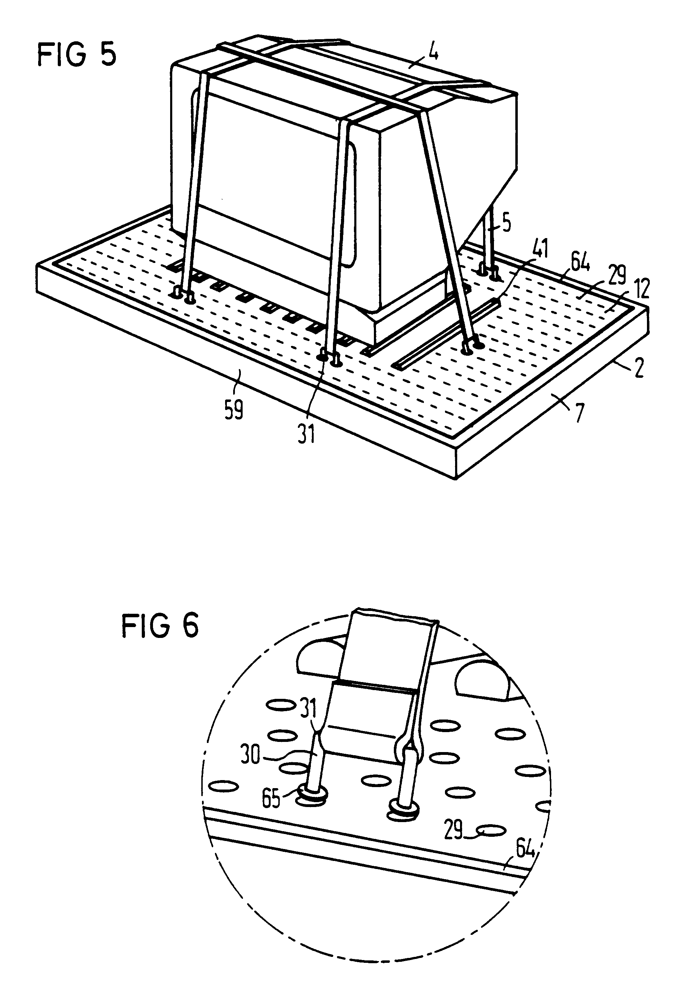

Die Befestigung des Packgutes 4 auf der Bodenwanneninnenseite 12 der Bodenwanne 2 ist in FIG 5 dargestellt. Das Packgut 4 ist durch die Innengurte 5 rutschfest an der Bodenwanneninnenseite 12 der Bodenwanne 2 befestigt. Die Innengurte 5 sind dabei mit ihrem einen Ende mit U-förmigen Haltebügeln 31 fest verbunden, deren Seitenschenkel 30, wie in FIG 6 gezeigt, in rasterförmig angeordnete, zylinderförmige Vertiefungen 29 einsteckbar, wobei die Seitenschenkel der Haltebügel 30 an ihren unteren Enden Scheiben 65 aufweisen, die nach Eindrücken der Bügel in die zylinderförmigen Vertiefungen 29 sich hinter dem Rand der zylinderförmigen Vertiefungen festklemmen, wodurch ein Herausziehen der Bügel bei Spannen der Innengurte 5 nicht mehr möglich ist. Die Innengurte 5 sind am waagrechten Teil der Bügel 31 dadurch befestigt, daß sie durch den Bügel durchgezogen und umgeklappt werden, wobei die Klappe über Niet- oder sonstige Verbindungen mit dem Gurtunterteil zusammengeklemmt ist, wodurch eine feste Verbindung mit dem U-förmigen Haltebügel 31 erfolgt. Rund um den äußeren Rand der Bodenwanne 2 verläuft eine Rille 64, die zur Aufnahme des Ringes 3, wie noch erläutert, dient. Das Packgut 4 steht auf Gummi- oder Kunststoffleisten 41, die wiederum eine gewölbte Oberfläche aufweisen und die mit Ansätzen 40 an der Unterseite der Gummi- oder Kunststoffleiste 41 in die vorgesehenen zylinderförmigen Vertiefungen 29 einrastbar sind. Sofern diese Leisten als Kunststoffleisten 41 ausgebildet sind, können sie auch gleich an der Außenseitendeckfläche 49 der Deckwanne 1 angeformt sein.

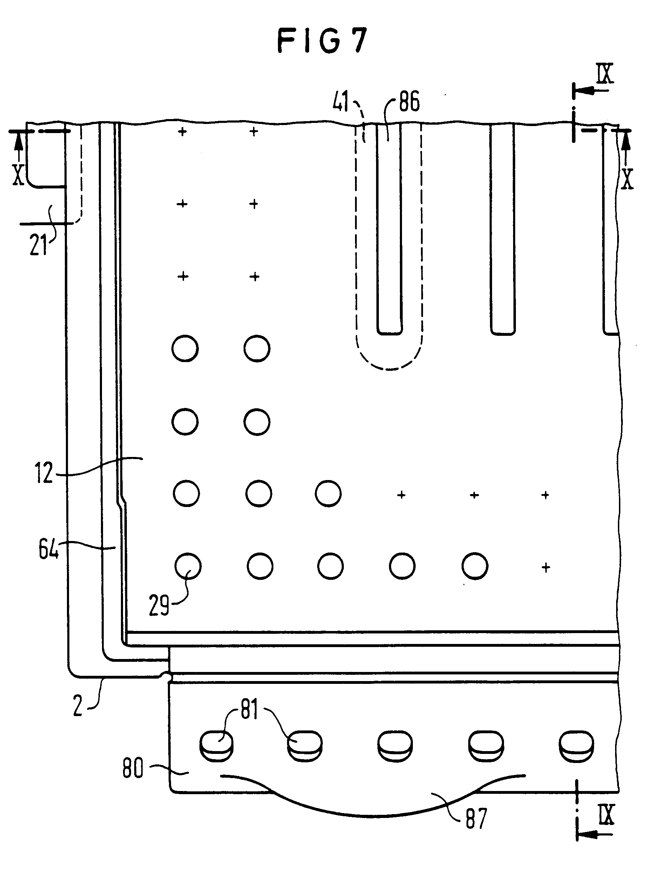

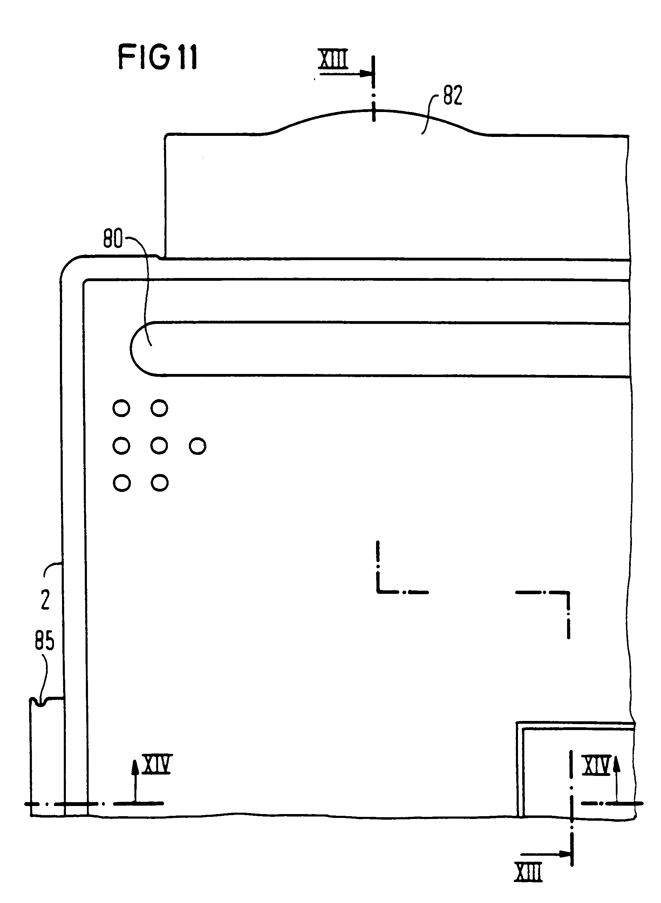

Anhand der FIG 7 bis 14 soll eine erste Ausgestaltungsform der Bodenwanne erläutert werden. Der Hohlraum 45 der Bodenwanne 2 besteht dabei aus zwei getrennten Kammern 78, 79, von denen die erste Kammer 78 einen wulstartigen Ring um die Peripherie der Bodenwanne 2 bildet und die zweite Kammer 79 durch Verschweißen mit der ersten Kammer 78 eine eingeschossene Luftkammer bildet. Der Boden der zweiten Kammer 79 ist jedoch gegenüber dem Boden der ersten Kammer 78 hochgehoben, so daß die zweite Kammer 79 eine geringere Tiefe aufweist als die erste. Dadurch entsteht eine federnde Wirkung für das Packgut. Die Trennung der beiden Kammern erfolgt dadurch, daß die Aussenseite 27 der Bodenwanne in einem vorgegebenen Abstand vom äußeren Rand V-förmig hochgezogen ist und dort mit der Bodenwanneninnenseite 12 verschweißt ist. Die Längsseiten der Bodenwanne 2 sind teilweise als klappbare Verschlußflächen 80 ausgebildet, an denen mehrere Druckverschlüsse 81 angeordnet sind, die rückseitig mit einem Ansatz 82 ausgeformt sind, der beim Umklappen der Verschlußflächen 80 den Ring 3 an jeweils vorgebildeten Durchbrüchen 83 durchragt und mit einem ebenfalls ausgeformten höckerförmigen Teil 84 in eine Rastmulde 85 an der Bodenwanne 2 einrastet. Die ausgeformten Ansätze 82 tauchen in die Vertiefungen 89 ein. Dadurch sind Ring und Bodenwanne 2 fest miteinander verbunden. Eine gleiche Verbindung läßt sich zwischen Deckwanne 1 und Ring 3 herstellen. Die Verschlußsicherung erfolgt mittels Verplombung, Verriegelung und Ähnlichem.

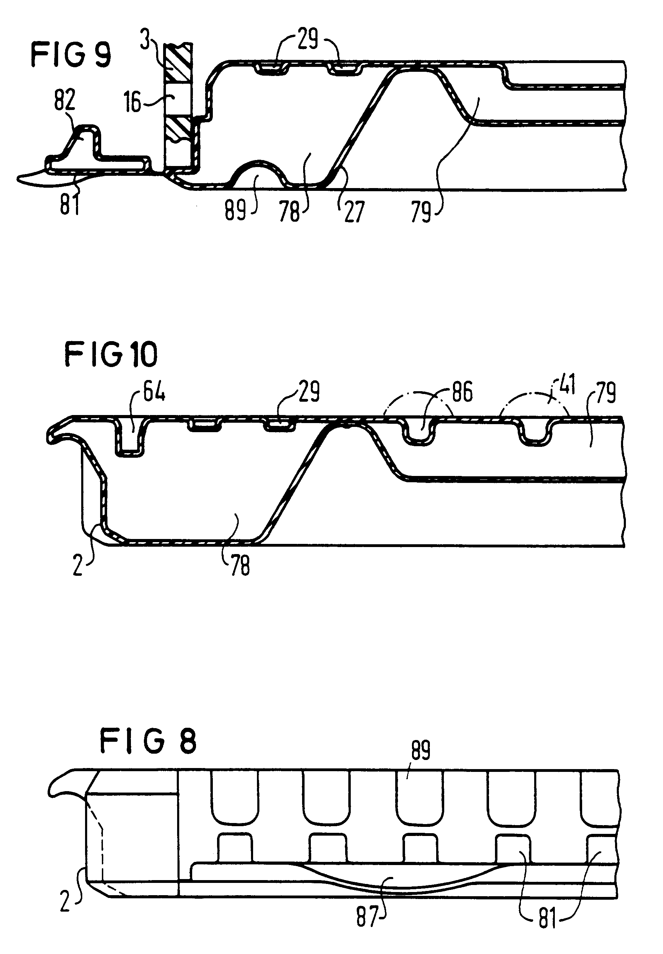

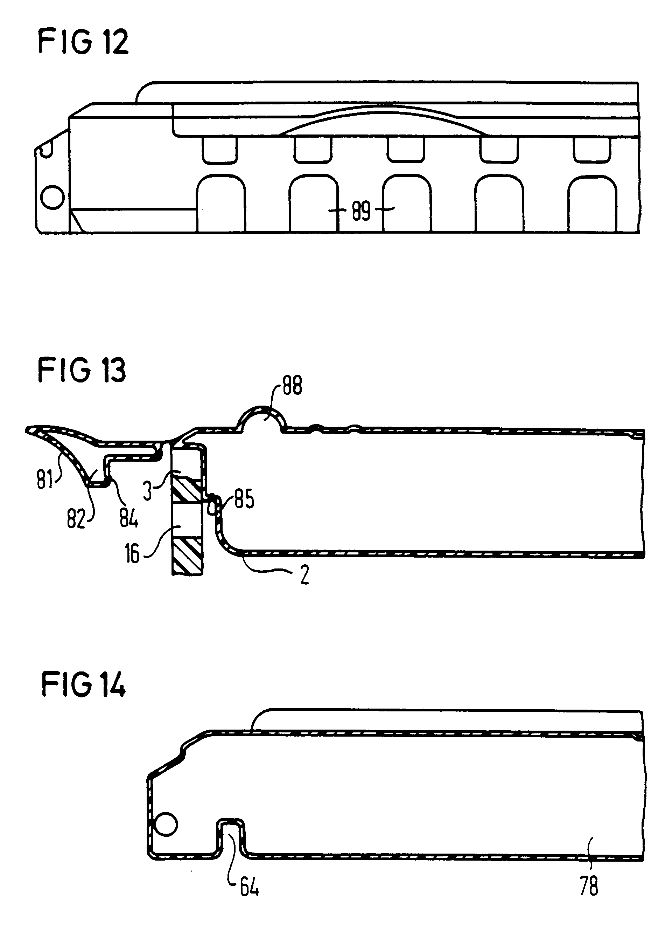

In den FIG 10 und 14 ist die umlaufende Rille 64 für den Ring 2 zu erkennen. Außerdem sind in den FIG 7, 9 und 10 die Vertiefungen 29 für die Aufnahme von Haltebügeln für die Innengurte 5 zu sehen und außerdem in FIG 10 die Nuten 86 für die Aufnahme der Gummi- oder Kunststoffleisten 41. Sofern diese Leisten aus Kunststoff ausgebildet sind, können sie auch gleich auf der Bodenwanneninnenseite 12 mit ausgeformt sein. Aus FIG 13 ist der Druckverschluß 81 im Querschnitt zu erkennen. Der Druckverschluß läuft auf seiner Hinterseite in einen Ansatz 82 aus, der auf seiner steilen Flanke eine nockenförmige Auswölbung 84 aufweist. Beim Umklappen der Verschlußfläche durchragen die Ansätze 82 die Durchbrüche 83 des Rings 3 und die nockenförmige Auswölbung, greift in eine Rastmulde 85 an der Bodenwanne 2 ein. Dadurch ist der Ring 3 fest mit der Bodenwanne verbunden. Das gleiche gilt für die Deckwanne. An der Bodenwannenaußenseite 27 befindet sich außerdem eine rinnenartige Ausbuchtung 88.

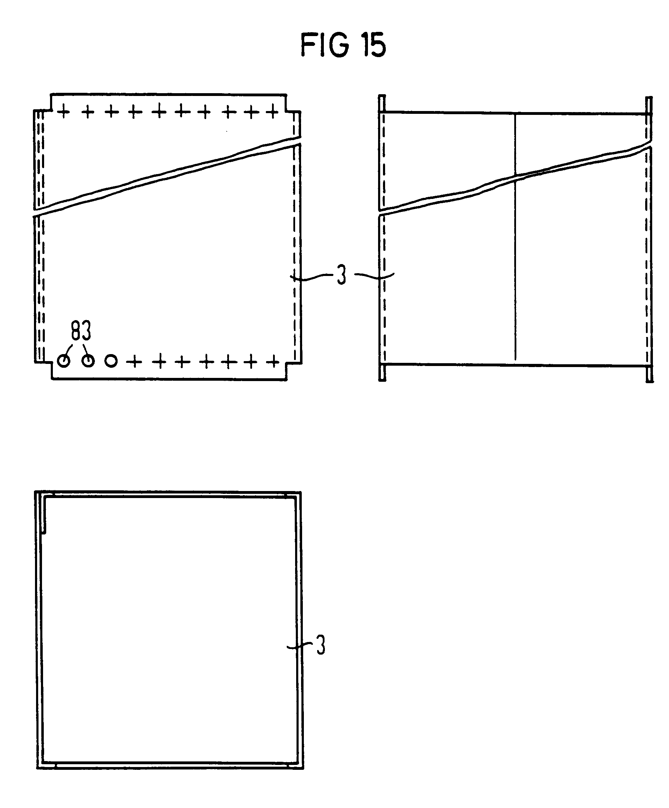

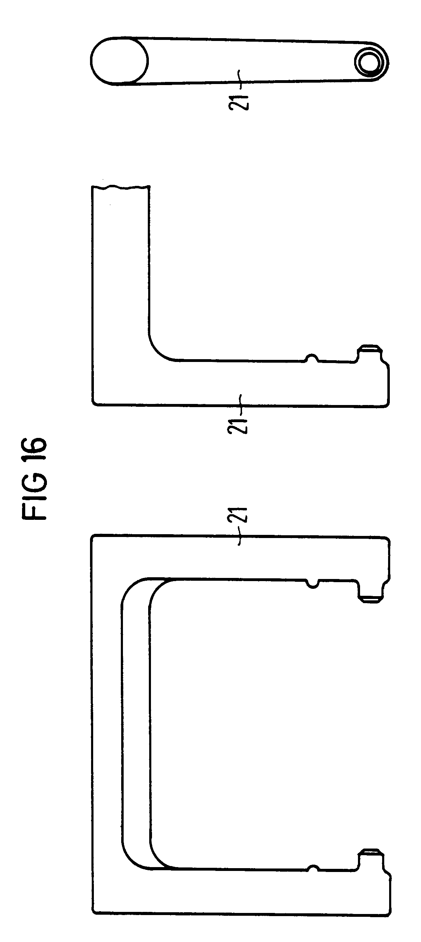

In FIG 15 ist in Vorder- und Seitenansicht die Draufsicht des ringes 3 dargestellt. Die Durchbrüche 83 für die Aufnahme der Ansätze 82 des Druckverschlusses 81 befinden sich jeweils an der Ober- und Unterseite der Längsseite des Ringes 3. FIG 16 stellt den Griff 21 in Draufsicht, in Unteransicht und in Seitenansicht dar.

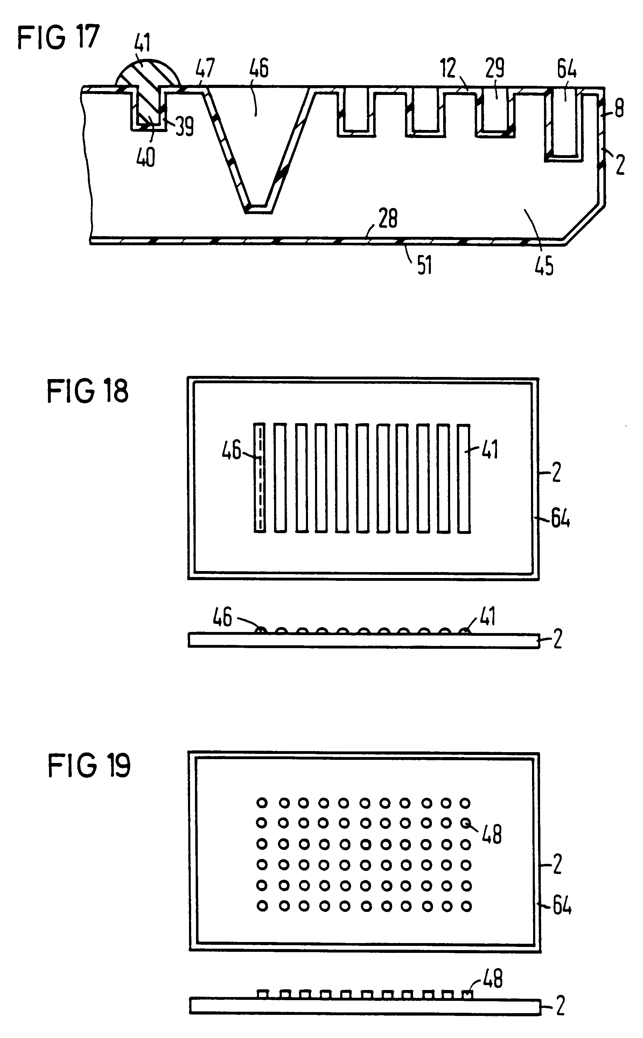

Eine andere Ausführungsform der Bodenwanne 2 zeigt FIG 17. Sie ist ebenfalls ein Hohlkörper, der beispielsweise nach dem Blas-Spritzverfahren hergestellt werden kann. Durch den Hohlraum 45 wird eine stoßdämpfende Wirkung erzielt, die auch bei nicht sachgerechtem Umgang mit dem Transportgut das Packgut 4 vor Zerstörung schützt. Neben den zylinderförmigen Vertiefungen 29, die wie vorstehend schon beschrieben, zur Befestigung der Haltebügel 31 bzw. der Gummi- oder Kunststoffleisten 41 dienen, sind in der Nähe des Aufsatzplatzes 47 für das Packgut 4 weitere Vertiefungen 46 vorgesehen, die fast bis zum Innenboden 28 der Bodenwanne reichen, und die beim Zusammendrücken der hohlräumigen Bodenwanne 2 durch eventuelle Stoßbelastung auf den Innenboden 28 der Bodenwanne 2 aufsitzen und so eine zusätzliche federnde Wirkung hervorrufen.

In FIG 18 ist die Anordnung der Gummi- oder Kunststoffleisten 41 am Aufsatzblatt 47 des Packgutes 4 nocheinmal schematisch gezeigt.

Eine andere Möglichkeit zeigt die FIG 19. Hier werden anstelle der Gummi- oder Kunststoffleisten 41 auf der Bodenwanneninnenseite bereits Kunststoffhöcker 48 vorgesehen, die zusätzlich eine rutschhemmende Wirkung hervorrufen.

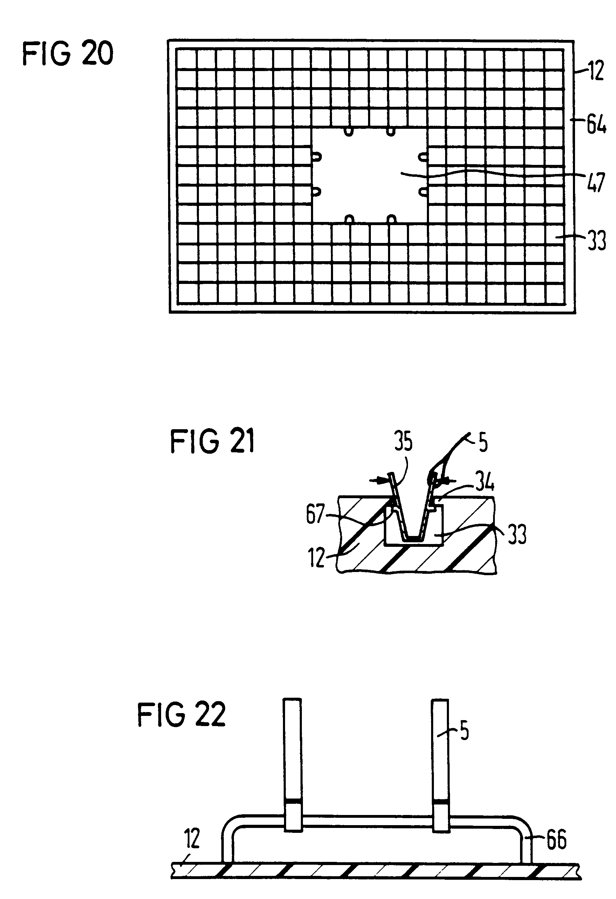

Eine weitere Möglichkeit, die Innengurte 5 an der Bodenwanneninnenseite zu befestigen, besteht, wie in FIG 20 dargestellt darin, daß anstelle der zylinderförmigen Vertiefungen 29 quaderförmige Vertiefungen 33 vorgesehen werden, die an ihrer Oberseite einen vorspringenden Rand 34 aufweisen. Spannschnapper 35 werden in diese quaderförmigen Vertiefungen 33 eingerastet und am Herausziehen durch an den Spannschnappern 35 angeordneten Nasen 67 verhindert. Durch Zusammendrücken des federnden Spannschnappers 35 läßt sich dieser wieder aus der quaderförmigen Vertiefung 33 herausnehmen. Am Spannschnapper 35 selbst sind dann die Innengurte 5 befestigt. Ein Querschnitt durch eine quaderförmige Vertiefung 33 ist in FIG 21 dargestellt. Auch bei einer Ausgestaltung, wie in FIG 20 gezeigt, lassen sich U-förmige Bügel in die quaderförmigen Vertiefungen 33 eindrücken, wobei in FIG 22 eine Ausführungsform gezeigt ist, bei der an einem weiteren Haltebügel 66 zwei Haltegurte 5 befestigt sind, der weitere Haltebügel 66 stellt lediglich eine Variante zum Haltebügel 31, wie in FIG 6 beschrieben, dar.

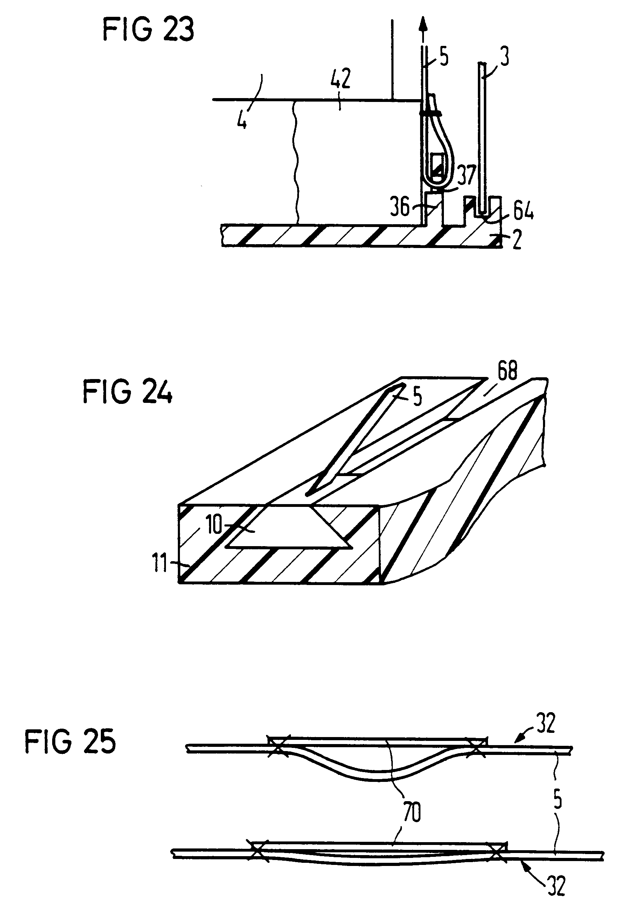

Eine vierte Möglichkeit der Halterung der Innengurte 5 zeigt FIG 23. Bei dieser Anordnung werden in die Bodenwanne 2 Stege 36 mit eingegossen, die Durchbrüche 37 aufweisen, durch die die einen Enden der Haltegurte 5 gezogen werden, so daß eine Schlaufe gebildet werden kann. Dabei ist die Bodenwanne 2 vereinfachend nicht als Hohlkörper dargestellt, wie vorstehend beschrieben. Zudem ist für die Aufnahme des Packgutes 4 bei einer derartigen Ausführungsform ein Polster 42 zwischen Bodenwanne 2 und Packgut 4 vorgesehen, der eine federnde Wirkung besitzt.

Anhand der FIG 24 ist eine fünfte Möglichkeit der Befestigung der Innengurte an der Bodenwanneninnenseite 12 gezeigt. Dabei werden parallel zu den umlaufenden Rillen 64 für die Aufnahme des Ringes 3 Gleitschienen 11 an der Bodenwanneninnenseite oder in der Bodenwanneninnenseite selbst angeordnet, die mit Schlitzen 68 versehen sind, in denen Gleitsteine 10, die an den Enden der Haltegurte 5 befestigt sind, verschiebbar angeordnet sind. Die freien Enden der Innengurte 5 werden mit Verschlüssen versehen, die als Einhängebügel oder auch als Spannverschlüsse ausgebildet sein können. Dadurch ist gewährleistet, daß am Packgut kein Scheuern auftritt. Es kann ein definiertes Anzugsmoment dadurch eingestellt werden, daß beispielsweise, wie in FIG 25 dargestellt, eine Kontrollvorrichtung zur Erkennung der Bandspannung vorgesehen wird, die darin besteht, daß an einer Stelle der Innengurte 5 ein elastisches Band 70 so angebracht ist, daß zwischen den beiden Verbindungsstellen mit dem elastischen Band 70 die Innengurte 5 durchhängen. Sind die Innengurte 5 angezogen, so wird das elastische Band 70 gespannt und damit ist die Endstellung für den jeweiligen Innengurt 5 erreicht und damit auch das vorgegebene Anzugsmoment. Die Verschlüsse sind unverlierbar, z.B. durch Vernieten, Verschrauben oder Verschweißen mit den Innengurten 5 verbunden.

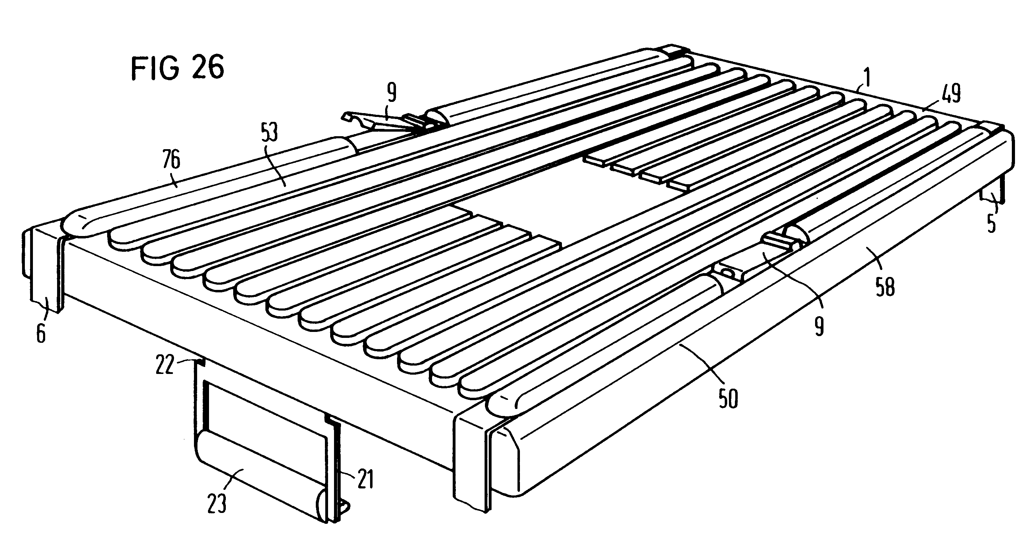

Eine erste Ausführungsform der Deckwanne 1 ist in FIG 26 perspektivisch dargestellt. Dabei wird davon ausgegangen, daß die drei Teile, Deckwanne 1, Ring 3 und Bodenwanne 2, über Außengurte 6 zusammengehalten werden. Diese Außengurte 6 sind an der Bodenwanne 2 befestigt und werden mit an der Deckwanne 1 angebrachten Gleitklemmverschlüssen 9 gespannt. Die Außengurte 6 werden dabei in Nuten 13 der Außenseitendeckfläche 49 entlang ihren Längsseiten 50 geführt. Entlang dieser Längsseiten 50 und oberhalb der Außengurte 6 sind wieder die Kunststoffleisten 76 angebracht. Zwischen diesen beiden Kunststoffleisten 76 können auch weitere Kunststoffleisten 53 vorgesehen sein, die eine ebene Oberfläche aufweisen. Sie erhöhen die Steifigkeit der Deckwanne 1 von Mehrwegcontainern. An den Schmalseiten der Deckwanne 1 sind Griffe 21 angebracht, die über ein Scharnier 22 um 180°schwenkbar sind. Diese Griffe weisen an ihrer, dem Scharnier 22 gegenüberliegenden Seite Ausformungen 23 auf, die sowohl das Tragen erleichtern sollen, als auch zugleich als Rastverschluß bei zusammengeklappten Mehrwegcontainern dienen, wobei dieser Verschluß in vorgesehene Stellen an der Bodenwanne 2 eingreift und Deck- und Bodenwanne fest miteinander verrastet.

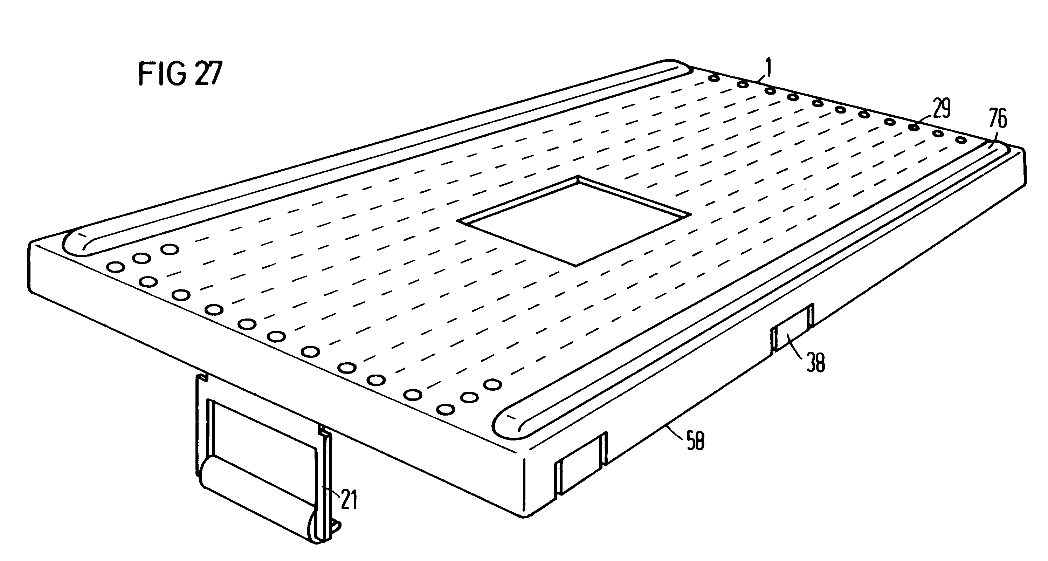

Eine zweite Form, die Deckwanne 1 auszugestalten, zeigt FIG 27. Dabei sind zum Zusammenhalten der drei Containerteile Schiebeverschlüsse an den Längsseiten 50 der Außenseitenoberfläche der Deckwanne 1 angeordnet, die über Schieber 38 betätigbar sind. Auch diese Ausführungsform erhält wieder Griffe 21, wie bei FIG 16 bereits beschrieben.

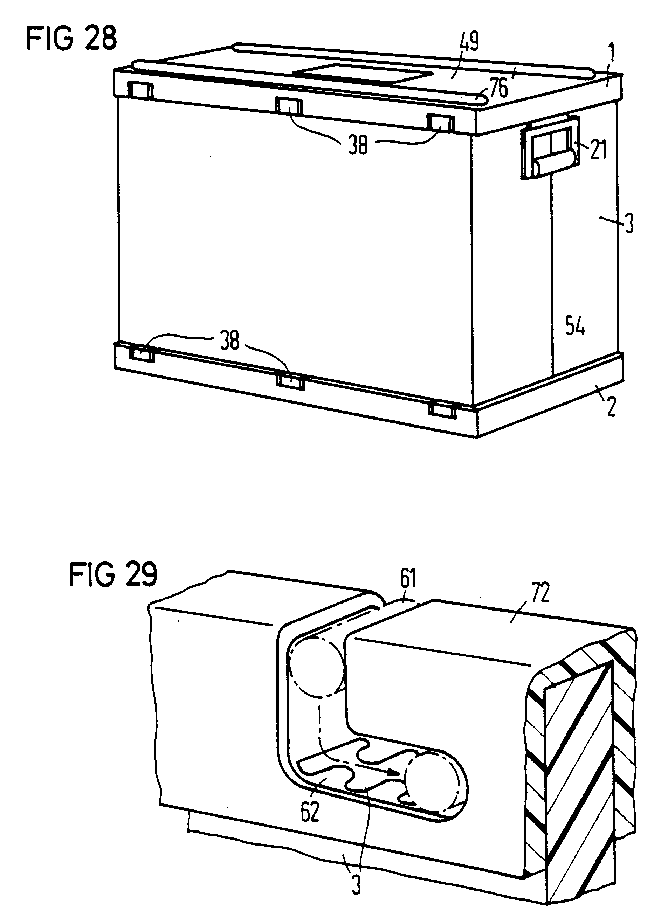

In FIG 28 ist ein Mehrwegcontainer mit Schiebeverschluß zum Zusammenhalten der drei Containerteile dargestellt. In die Bodenwanne 2 ist der Ring 3 eingesteckt, und auf den Ring 3 ist die Deckwanne 1 aufgesetzt. Bodenwanne 2 und Deckwanne 1 werden mit dem Ring 3 durch Schiebeverschlüsse mit den Schiebern 38 befestigt. Auf der Außenseitendeckfläche 29 der Deckwanne 1 sind wieder die Kunststoffleisten 76 erkennbar. Die Deckwanne 1 weist wieder Griffe 21 auf, und an der Vorderseite des Rings 3 ist die Falzlinie 54 des Rings 3 ersichtlich, entlang der der Ring 3 nach Gebrauch zusammengelegt werden kann.

Die Funktionsweise des Schiebeverschlusses ist im Detail aus FIG 29 ersichtlich. An den Schiebern 38, die nicht dargestellt sind, befinden sich zylindrisch ausgebildete Speerriegel 61, die beim Auflegen der Deckwanne 1 oder der Bodenwanne 2 in dem vertikalen Teil der rechtwinkelig ausgebildeten Kulissen 62 einfahren und sich dann am unteren Ende des vertikalen Teiles der Kulisse 62 befinden. Anschließend werden sie über die Schieber 38 waagrecht nach rechts verschoben, so daß dann die Deck- und Bodenwanne fest mit dem Ring 3 verbunden ist.

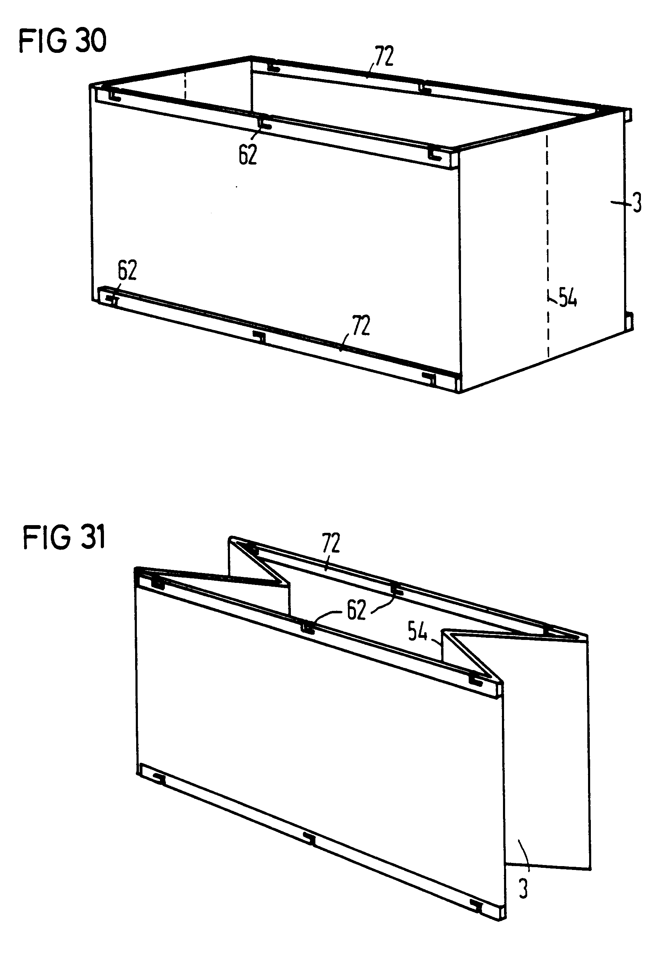

In FIG 30 sind die Kulissenführungen 62 an dem verstärktem Rand des Ringes 3 erkennbar. Die Verstärkung kann aus Schienen 72 mit festerem Material als dem des Ringes bestehen.

In FIG 31 ist der gleiche Ring 3 in teilweise zusammengeklappter Stellung dargestellt, wobei die beiden Schmalflächen entlang der Falzlinie 54 gefaltet sind. In dieser gefalteten Form läßt sich der Ring 3 nach Gebrauch in die Bodenwanne einlegen. Die Deckwanne wird darüber gestülpt und mit der Bodenwanne beispielsweise über die Griffe 21, wie vorstehend schon ausgeführt, verriegelt, so daß nach Gebrauch Deck- und Bodenwanne zugleich als Rücksendebehälter für den Ring 3 dienen.

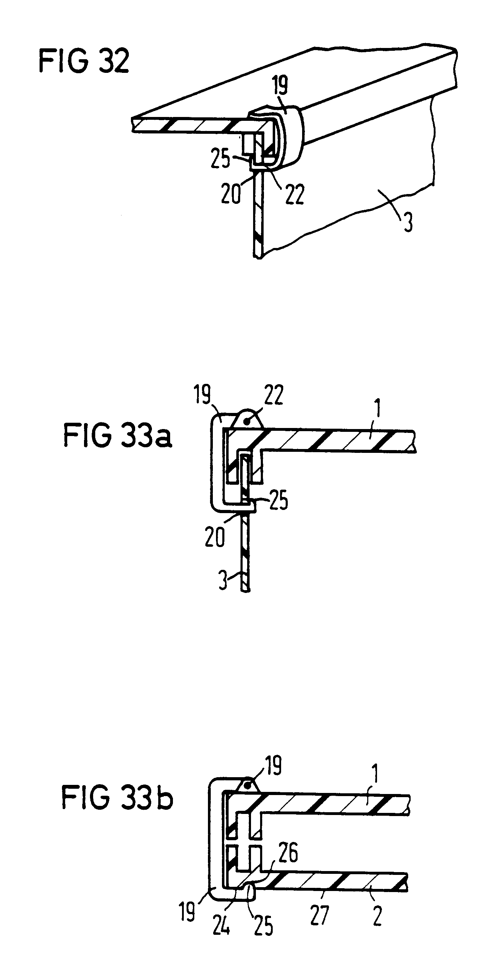

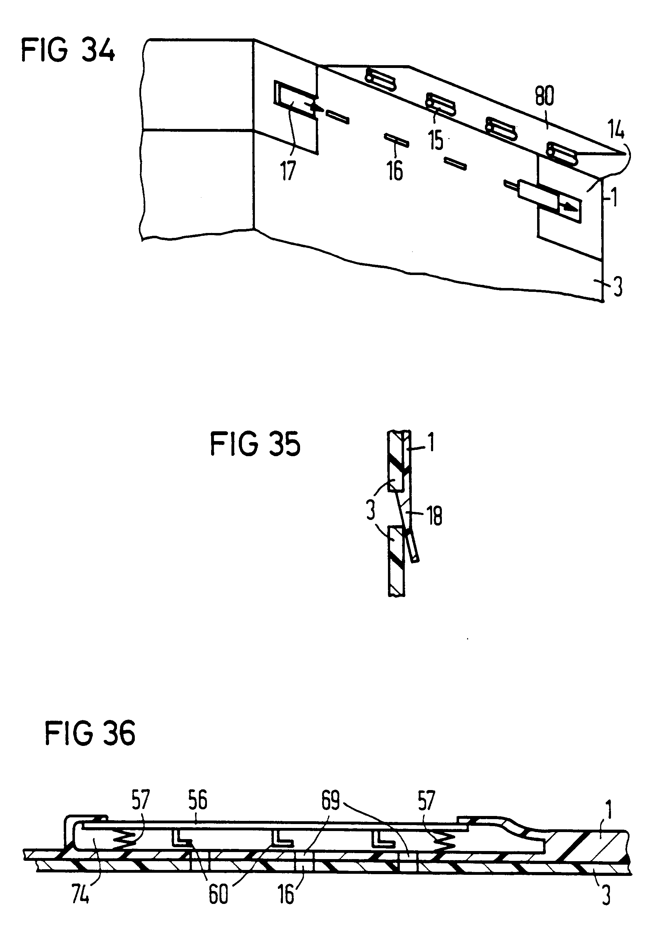

Eine dritte Möglichkeit, die drei Teile zusammenzuhalten, besteht darin, daß ein an der Deckwannenaußenseite oder der Bodenwannenaußenseite 27 gelenkigverbundener Bügel 19, wie in FIG 32 dargestellt, in vorgesehene zweite Aussparungen an den Kanten des Rings 3 einrastet, wobei am nicht gelagerten Ende des Bügels ein Noppen 25 vorgesehen ist, der das Einrasten des Bügels 19 bewirkt. In FIG 33a ist im Querschnitt nocheinmal die Funktion der Haltewirkung des Griffes 19 dargestellt. Dieser Griff kann dann gleichzeitig auch als Verschluß bei zusammengeklappte Mehrwegverpackung verwendet werden, indem, wie in FIG 33 gezeigt, an der Bodenwannenaußenseite 27 der Bodenwanne 2 eine entsprechende Vertiefung 26 vorgesehen ist, in die der Noppen 25 einrastet und dadurch Deck- und Bodenwanne zusammenhält. Eine vierte Möglichkeit des Zusammenfügens der drei Teile besteht, wie in FIG 34 gezeigt darin, daß die Deckwanne 1 und die Bodenwanne 2 klappbare Seitenwände 14 aufweisen, an denen Rohrstücke 15 befestigt sind, die nach dem Umklappen in erste Aussparungen 16 des Rings eingreifen und von hinten über eine verschiebbare, nicht dargestellte Durchsteckstange über Schiebetasten 17 verriegelt werden. Eine fünfte Möglichkeit der Verriegelung ist dadurch möglich, daß nach FIG 35 in den Seitenteilen von Deck- und Bodenschale Einsprengungen vorgesehen sind, die ebenfalls durch Drücken betätigbar sind und dann in die ersten Aussparungen 16 des Rings einrasten.

Auch läßt sich eine wirksame Verriegelung der drei Teile dadurch herbeiführen, daß an den Seitenwänden der Deck- und Bodenwannen Taschen vorgesehen sind, in denen eine Schiebeleiste 56, wie in FIG 36 dargestellt, federnd über Federn 57 eingelegt ist, und die an ihrer Unterseite mit rechtwinkeligen Haken 60 versehen sind, die in die ersten Aussparungen 16 des Rings 3 nach Verschieben einrasten, wobei an den gleichen Stellen, wo die ersten Aussparungen des Ringes 3 liegen, in den Seitenwänden der Deck- und Bodenwanne ebenfalls Aussparungen 69 eingebracht sind.

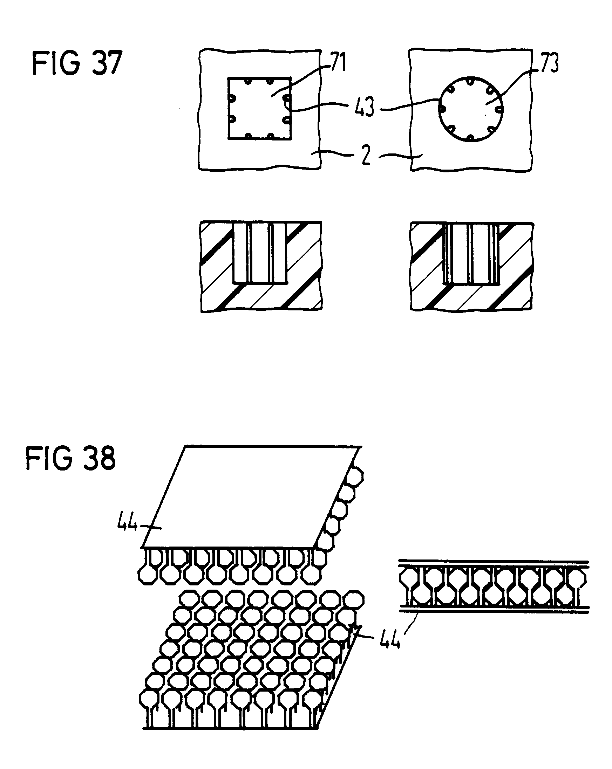

Wenn die Bodenwanne 2 ohne Hohlraum ausgebildet ist, so empfiehlt es sich, eine Dämpfungseinlage zwischen Bodenwanne und Packgut einzulegen. Diese Dämpfungseinlage 42, wie in FIG 1 gezeigt, kann auf verschiedene Weise mit dem Innenboden 28 der Bodenwanne 2 befestigt werden, indem beispielsweise quadratische oder zylindrische Ausnehmungen 71, 73 in der Bodenwanne angebracht sind, die mit Klemmstegen 43 versehen sind. Eine Draufsicht und der jeweilige Schnitt durch eine solche Kammer ist in der FIG 37 dargestellt.

Eine weitere Befestigungsmöglichkeit besteht mit Hilfe eines Klettbandes 44, wie es in FIG 38 gezeigt ist. Auch das Druckknopfprinzip läßt sich dabei vorteilhaft verwenden.

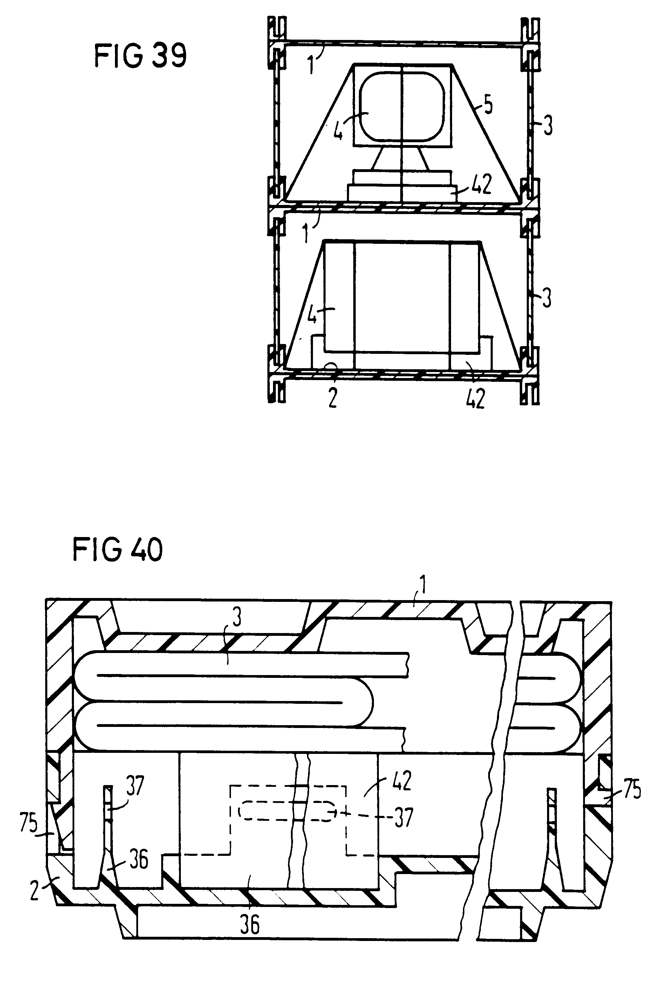

Ein Querschnitt durch zwei übereinander gestapelte Mehrwegcontainer mit unterschiedlichem Packgut 4 ist in FIG 39 gezeigt, wobei bei dieser Anordnung von einer Bodenwanne ohne Hohlraum ausgegangen wird, so daß zwischen Bodenwanne und Packgut jeweils eine Dämpfungseinlage 42 vorgesehen ist. Das Packgut selbst ist über die Innengurte 5 wieder rutschfest fixiert. Bildet man die Außenseitendeckfläche der Deckwanne 1 so aus, wie die Innenseitenoberfläche der Bodenwanne 2, so läßt sich unmittelbar auf die Deckwanne 1 des unteren Containers das Packgut 4 des nächsten Containers aufsetzen, so daß man eine Wanne einsparen kann.

Ein Container ohne Hohlraum im zusammengelegten Zustand wird anhand der FIG 40 beschrieben. Die Bodenwanne 2 enthält dabei Befestigungsstege 36 für die Befestigung der nicht dargestellten Innengurte 5, sowie ein Polster 42 als Federlement. Auf dem Polsterelement liegt der zusammengeklappte Ring 3, und die Deckwanne 1 ist mit der Bodenwanne über Rastverschlüsse 75 zusammengehalten, so daß in diesem Zustand die Rücksendung des Mehrwegcontainers erfolgen kann.

Deck- und Bodenwanne des Mehrwegcontainers können dabei aus Kunststoff, wie z.B. Polyäthylen oder Polypropylen ausgebildet sein, während der Ring in einfacher Weise aus Pappe bestehen kann. Es können jedoch auch andere Materialien verwendet werden, so beispielsweise für den Ring auch Kunststoff oder Aluminium. Auch die Boden- und Deckwanne könnte aus Leichtmetall ausgeführt sein.

## Patentansprüche

1. Mehrwegcontainer zur Verpackung von Gütern aller Art, bestehend aus einer Deck- und einer Bodenwanne (1,2) mit jeweils einer auf den Innenseitenrändern rundum verlaufenden Rille und einem die Seitenwände bildenden, nach Gebrauch zusammenfaltbaren Ring (3), der während des Gebrauchs in die rundum laufenden Rillen (64) der beiden Wannen einsteckbar ist, sowie Mitteln zum Zusammenhalten der drei Teile während des Gebrauchs, **dadurch gekennzeichnet,** daß mindestens eine Wanne (1,2), vorzugsweise die Bodenwanne (2), als Hohlkörper ausgebildet ist, daß die Fixierung des Packgutes (4) mittels unverlierbarer und kontinuierlich spannbarer, an der Bodenwanne (2) befestigter Innengurte (5) erfolgt und daß die Mittel zum Zusammenhalten der drei Teile (1,2,3) nach dem Gebrauch an einer der Wannen (1,2) befestigt sind.

2. Mehrwegcontainer zur Verpackung von Gütern aller Art nach Anspruch 1, **dadurch gekennzeichnet**, daß der Hohlraum (45) der Bodenwanne (2) aus zwei getrennten Kammern (78,79) besteht, von denen die erste Kammer (7,8) einen wulstartigen Ring um die Peripherie der Bodenwanne (2) bildet und die zweite Kammer (79) den von der ersten Kammer (78) umschlossenen Mittelteil bildet, dessen Boden jedoch gegenüber dem Boden der ersten Kammer (78) hochgehoben ist, so daß die zweite Kammer (79) eine geringere Tiefe aufweist als die erste.

3. Mehrwegcontainer zur Verpackung von Gütern aller Art nach einem der Ansprüche 1 oder 2, **dadurch gekennzeichnet,** daß die Mittel zum Zusammenhalten der drei Teile während des Gebrauchs aus Außengurten (6) bestehen, die an ihrer einen Seite in Öffnungen (7) an den Seitenwänden (8) der Bodenwanne (2) befestigt sind und an ihren anderen Enden mit einem spann- und lockerbaren Gleitklemm- oder Rutschverschluß (9) versehen sind.

4. Mehrwegcontainer zur Verpackung von Gütern aller Art nach einem der Ansprüche 1 oder 2, **dadurch gekennzeichnet,** daß die Mittel zum Zusammenhalten der drei Teile während des Gebrauchs aus klappbaren, als Teil der Seitenwände (14) der beiden Wannen (1,2) ausgebildeten Verschlußflächen (89) bestehen, die an ihrer Innenseite mit in Reihe angeordneten Rohrstücken (15) versehen sind, die in erste Aussparungen (16) des Rings eingreifen und mittels verschiebbaren Durchsteckstangen oder mittels äußerer Riegel (17) verriegelbar sind.

5. Mehrwegcontainer zur Verpackung von Gütern aller Art nach einem der Ansprüche 1 oder 2, **dadurch gekennzeichnet,** daß die Mittel zum Zusammenhalten der drei Teile aus gefedert gelagerten Schiebeleisten (56) an den Längsseiten (58,59) der Deck- (1) und Bodenwanne (2) bestehen, an deren Unterseite Haken (60) angebracht sind, die in erste Aussparungen (16) des Ringes (3) beim Verschieben eingreifen.

6. Mehrwegcontainer zur Verpackung von Gütern aller Art nach einem der Ansprüche 1 oder 2, **dadurch gekennzeichnet,** daß die Mittel zum Zusammenhalten der drei Teile aus an den Längsseiten (58,59) der Deck- (1) und Bodenwanne (2) angebrachten Schiebern (38) bestehen, die rückseitig zylindrische Sperriegel besitzen, die beim Aufsetzen der Deck- (1) und Bodenwanne (2) auf den Ring (3) in rechtwinkelig ausgeformten Kulissen (62) eingreifen.

7. Mehrwegcontainer zur Verpackung von Gütern aller Art nach einem der Ansprüche 1 oder 2, **dadurch gekennzeichnet,** daß die Mittel zum Zusammenhalten der drei Teile während des Gebrauchs aus klappbaren, als Teil der Seitenwände (14) der beiden Wannen (1,2) ausgebildeten Verschlußflächen (80) bestehen, die von außen eindrückbare Einsprengungen enthalten, die in erste Aussparungen (16) des Rings einrasten.

8. Mehrwegcontainer zur Verpackung von Gütern aller Art nach einem der Ansprüche 1, **dadurch gekennzeichnet,** daß die Mittel zum Zusammenhalten der drei Teile während des Gebrauchs aus an der Außenseite der Deck- und Bodenwanne schwenkbar gelagerten U-förmigen Bügeln bestehen, die in zweite Aussparungen an den Kanten des Ringes einrasten.

9. Mehrwegcontainer zur Verpackung von Gütern aller Art nach einem der Ansprüche 1 oder 2, **dadurch gekennzeichnet,** daß die Mittel zum Zusammenhalten der drei Teile während des Gebrauchs aus klappbaren, als Teil der Seitenwände (14) der Deck- (1) und Bodenwanne (2) ausgebildeten Verschlußflächen (80) bestehen, die mit Druckverschlüssen (81) bestückt sind, an denen rückseitig ein Ansatz (82) ausgeformt ist, der beim Umklappen der Verschlußflächen (80) den Ring (3) an jeweils vorgebildeten Durchbrüchen (83) durchragt und mit einem ebenfalls angeformten noppenförmigen Teil (84) in eine Rastmulde (85) an der Deck- (1) bzw. Bodenwanne (2) einrastet.

10. Mehrwegcontainer zur Verpackung von Gütern aller Art nach einem der vorhergehenden Ansprüche, **dadurch gekennzeichnet,** daß an zwei gegenüberliegenden Seiten der Deckwanne um 180° klappbare Griffe (21) befestigt sind, die an der dem Griffscharnier (22) gegenüberliegenden Seite Ausformungen (23) aufweisen, die in in den Seitenwänden (8) der Bodenwanne (2) angebrachte Schlitze eingreifen oder die Unterkante (24) der Bodenwanne (2) umgreifen.

11. Mehrwegcontainer zur Verpackung von Gütern aller Art nach den Ansprüchen 8 und 10, **dadurch gekennzeichnet,** daß das nicht gelagerte Ende des U-förmigen Bügels (19) die Unterkante (24) der Bodenwanne (2) umgreift und mit einem am Bügelende befindlichen Rastnoppen (25) in eine Vertiefung (26) an der Außenseite (27) der Bodenwanne (2) eingreift.

12. Mehrwegcontainer zur Verpackung von Gütern aller Art nach einem der vorhergehenden Ansprüche, **dadurch** **gekennzeichnet,** daß auf Bodenwanneninnenseite (12) rasterförmig angeordnete, nicht bis zum Innenboden (28) der Bodenwanne (2) reichende, zylinderförmige Vertiefungen (29) angeordnet sind, in die die Seitenschenkel (30) U-förmig ausgebildeter Haltebügel (31,66) einrastbar sind, an denen die Innengurte (5) mit ihrem einen Ende befestigt sind, wobei die anderen Enden der Innengurte (5) verstellbare Verschlüsse (32) aufweisen, wodurch die Innengurte (5) spannbar sind.

13. Mehrwegcontainer nach einem der Ansprüche 1 bis 11, **dadurch gekennzeichnet,** daß auf der Bodenwanneninnenseite (12) nicht bis zum Innenboden (28) der Bodenwanne (2) reichende quaderförmige Vertiefungen (33) angeordnet sind, die an ihrer Oberseite durch einen vorspringenden Rand (34) verengt sind, und daß in diesen quaderförmigen Vertiefungen (33) mitNasen (67) versehene Spannschnapper (35) einsteckbar sind, an denen die Enden der Inngengurte (5) befestigt sind, wobei die anderen Enden der Innengurte (5) verstellbare Verschlüsse (32) aufweisen, wodurch die Innengurte stufenlos spannbar sind.

14. Mehrwegcontainer zur Verpackung von Gütern aller Art nach einem der Ansprüche 1 bis 11, **dadurch gekennzeichnet,** daß entlang der Peripherie der Bodenwanneninnenseite (12) Gleitschienen (11) verlaufen, in denen Gleitsteine (10) verschiebbar angeordnet sind, die mit den einen Enden der Innengurte (5) verbunden sind, wobei die anderen Enden der Innengurte (5) verstellbare Verschlüsse aufweisen, so daß die Innengurte (5) stufenlos spannbar sind.

15. Mehrwegcontainer zur Verpackung von Gütern aller Art nach einem der Ansprüche 1 bis 11, **dadurch gekennzeichnet,** daß im Innenboden (28) der Bodenwanne (2) nach oben ragende Stege (36) mit Durchbrüchen (37) eingearbeitet sind, in denen die einen Enden der Innengurte (5) befestigt sind, wobei die anderen Enden der Innengurte (5) verstellbare Veschlüsse aufweisen, so daß die Innengurte (5) stufenlos spannbar sind.

16. Mehrwegcontainer zur Verpackung von Gütern aller Art nach einem der Ansprüche 12 bis 15, **dadurch gekennzeichnet,** daß an einer Stelle der Innengurte (5) ein elastisches Band (70) so angebracht ist, daß die Innengurte (5) durchhängen.

17. Mehrwegcontainer zur Verpackung von Gütern aller Art nach einem der vorhergehenden Ansprüche, **dadurch gekennzeichnet,** daß am Aufsatzplatz (47) für das Packgut (4) der Bodenwanneninnenseite (12) in den Vertiefungen (39) in ihrem Querschnitt halbkreisförmig ausgebildete, an ihrer Unterseite mit an die Vertiefungen (39) angepaßten Ansätzen (40) versehene Gummi- oder Kunststoffleisten (41) eingeklemmt sind, auf denen das Packgut (4) steht, oder die Kunststoffleisten an der Bodeninnenseite (12) mit angeformt sind.

18. Mehrwegcontainer zur Verpackung von Gütern aller Art nach einem der Ansprüche 1 bis 16, **dadurch gekennzeichnet,** daß im Zentrum der Bodenwanneninnenseite (12) eine dem Packgut (4) angepaßte, aus Kunststoff bestehende Dämpfungseinlage (42) vorgesehen ist, die mit dem Boden über lösbare Verschlüsse, wie z.B. Klemmstege (43), Druckknöpfe oder Klettbänder (4) befestigbar ist.

19. Mehrwegcontainer zur Verpackung von Gütern aller Art nach einem der Ansprüche 1 bis 16, **dadurch gekennzeichnet,** daß am Aufsatzplatz (47) für das Packgut (4) der Bodenwanneninnenseite (12) aus der Bodenfläche herausragende, rasterförmig angeordnete Höcker (48) vorgesehen sind.

20. Mehrwegcontainer zur Verpackung von Gütern aller Art nach einem der vorhergehenden Ansprüche, **dadurch gekennzeichnet,** daß auf der Bodenwanneninnenseite (12), vorzugsweise um den Aufsatzplatz (47) des Packgutes (4), fast den gesamten Hohlraum (45) der Bodenwanne (2) in der Tiefe durchmessende, weitere Vertiefungen (46) vorgesehen sind.

21. Mehrwegcontainer zur Verpackung von Gütern aller Art nach einem der vorhergehenden Ansprüche, **dadurch gekennzeichnet,** daß die Außenseitendeckfläche (49) der Deckwanne (1) in gleicher Weise ausgebildet sind, wie die Bodenwanneninnenseiten (12).

22. Mehrwegcontainer zur Verpackung von Gütern alle Art nach einem der vorhergehenden Ansprüche, **dadurch gekennzeichnet,** daß auf der Deckwanne (1) oberhalb der Nuten (13) der Außenseitendeckfläche (49) ebenfalls Kunststoffleisten (76) mit halbkreisförmigem Querschnitt angeordnet sind, und daß an der gleichen Stelle der Bodenwannenaußenoberfläche (51) entsprechend den Kunststoffleisten (76) profilierte Rinnen (52) vorgesehen sind.

23. Nehrwegcontainer zur Verpackung von Gütern aller Art nach einem der vorhergehenden Ansprüche, **dadurch gekennzeichnet,** daß zwischen den beiden äußeren Kunststoffleisten (76) mit gewölbter Oberfläche auf der Außenseitendeckfläche (49) der Deckwanne (1) weitere Kunststoffleisten (53) mit ebener Oberfläche angebracht sind.

24. Mehrwegcontainer zur Verpackung von Gütern aller Art nach einem der vorliegenden Ansprüche, **dadurch gekennzeichnet,** daß der Ring (3) blasbalgartig um die vertikale Mittellinie (5) einer Schmalseite (55) faltbar ist.

25. Mehrwegcontainer zur Verpackung von Gütern aller Art nach einem der vorhergehenden Ansprüche, **dadurch gekennzeichnet,** daß die Deck- (1) und Bodenwanne (2) vorzugsweise aus Kunststoff, wie Polyäthylen oder Polypropylen und der Ring (3) aus Pappe bestehen.

## Claims

1. Reusable container for packing goods of all kinds, comprising a top and a bottom tray (1, 2) having respectively a channel running all the way round on the inside borders and having a body (3) which forms the side walls and is collapsible after use and can be inserted, during use, into the channels (64), running all the way round, of the two trays, and also having means for holding together the three parts during use, characterized in that at least one tray (1, 2), preferably the bottom tray (2), is configured as a hollow body, in that the securement of the packaged goods (4) is realized by means of captive and continuously tensionable inner belts (5) fastened to the bottom tray (2), and in that the means for holding together the three parts (1, 2, 3) after use are fastened to one of the trays (1, 2).

2. Reusable container for packing goods of all kinds according to Claim 1, characterized in that the cavity (45) of the bottom tray (2) comprises two separate chambers (78, 79), of which the first chamber (78) forms a bead-like ring around the periphery of the bottom tray (2) and the second chamber (79) forms the middle part which is enclosed by the first chamber (78) and the base of which is raised up however in relation to the base of the first chamber (78), so that the second chamber (79) exhibits a lesser depth than the first chamber.

3. Reusable container for packing goods of all kinds according to one of Claims 1 or 2, characterized in that the means for holding together the three parts during use comprise outer belts (6) which are fastened on their one side in openings (7) on the side walls (8) of the bottom tray (2) and are provided at their other ends with a tensionable and releasable sliding clamp fastener or antislip fastener (9).

4. Reusable container for packing goods of all kinds according to one of Claims 1 or 2, characterized in that the means for holding together the three parts during use comprise foldable fastening faces (89) which are configured as part of the side walls (14) of the two trays (1, 2) and are provided on their inner side with tubular pieces (15) arranged in a row, which tubular pieces engage in first recesses (16) in the body and can be locked in place by means of displaceable pass-through rods or by means of outer bolts (17).

5. Reusable container for packing goods of all kinds according to one of Claims 1 or 2, characterized in that the means for holding together the three parts comprise spring-mounted sliding bars (56) on the longitudinal sides (58, 59) of the top (1) and bottom tray (2), on the underside of which sliding bars hooks (60) are fitted which engage, upon displacement, in first recesses (16) of the body (3).

6. Reusable container for packing goods of all kinds according to one of Claims 1 or 2, characterized in that the means for holding together the three parts comprise slides (38) which are fitted to the longitudinal sides (58, 59) of the top (1) and bottom tray (2) and possess on their rear side cylindrical locking bolts, which, when the top (1) and bottom tray (2) are placed onto the body (3), engage in rectangularly formed, slotted links (62).

7. Reusable container for packing goods of all kinds according to one of Claims 1 or 2, characterized in that the means for holding together the three parts during use comprise foldable fastening faces (80) which are configured as part of the side walls (14) of the two trays (1, 2) and contain tabs which can be pressed in from the outside and latch into first recesses (16) in the body.

8. Reusable container for packing goods of all kinds according to one of Claims 1 or 2, characterized in that the means for holding together the three parts during use comprise U-shaped clips which are mounted pivotably on the outer side of the top and bottom tray and latch into second recesses on the edges of the body.

9. Reusable container for packing goods of all kinds according to one of Claims 1 or 2, characterized in that the means for holding together the three parts during use comprise foldable fastening faces (80) which are configured as part of the-side walls (14) of the top (1) and bottom tray (2) and are equipped with compression fasteners (81) on the rear side of which a lug (82) is formed, which, when the fastening faces (80) are folded over, protrudes through the body (3) at respectively preformed apertures (83) and latches in, with a likewise formed-on, knob-shaped part (84), into a latching depression (85) on the top (1) or bottom tray (2).

10. Reusable container for packing goods of all kinds according to one of the preceding claims, characterized in that fastened to two opposite sides of the top tray are handles (21) which can be folded by 180° and exhibit openings (23) on the side opposite the handle hinge (22), which openings engage in slots made in the side walls (8) of the bottom tray (2) or embrace the bottom edge (24) of the bottom tray (2).

11. Reusable container for packing goods of all kinds according to Claims 8 and 10, characterized in that the non-mounted end of the U-shaped clip (19) embraces the bottom edge (24) of the bottom tray (2) and engages, with a latching knob (25) located on the clip end, in an indentation (26) on the outer side (27) of the bottom tray (2).

12. Reusable container for packing goods of all kinds according to one of the preceding claims, characterized in that on the inner side (12) of the bottom tray there are disposed cylindrical indentations (29) which are disposed in a grid pattern and do not reach up to the inner base (28) of the bottom tray (2) and into which the side legs (30) of U-shaped retaining clips (31, 66) can be latched in, to which side legs the inner belts (5) are fastened by their one end, the other ends of the inner belts (5) exhibiting adjustable fasteners (32) by virtue of which the inner belts (5) are tensionable.

13. Reusable container according to one of Claims 1 to 11, characterized in that on the inner side (12) of the bottom tray there are disposed cuboid indentations (33) which do not reach up to the inner base (28) of the bottom tray (2) and which are constricted on their top side by a projecting border (34), and in that in these cuboid indentations (33) there can be inserted clamping catches (35) which are provided with bosses (67) and to which the ends of the inner belts (5) are fastened, the other ends of the inner belts (5) exhibiting adjustable fasteners (32), by virtue of which the inner belts are infinitely tensionable.

14. Reusable container for packing goods of all kinds according to one of Claims 1 to 11, characterized in that along the periphery of the inner side (12) of the bottom tray there run slide rails (11) in which sliding blocks (10) are displaceably disposed, which sliding blocks are connected to the one ends of the inner belts (5), the other ends of the inner belts (5) exhibiting adjustable fasteners, so that the inner belts (5) are infinitely tensionable.

15. Reusable container for packing goods of all kinds according to one of Claims 1 to 11, characterized in that incorporated in the inner base (28) of the bottom tray (2) are upwardly protruding fillets (36) having apertures (37) in which the one ends of the inner belts (5) are fastened, the other ends of the inner belts (5) exhibiting adjustable fasteners, so that the inner belts (5) are infinitely tensionable.

16. Reusable container for packing goods of all kinds according to one of Claims 12 to 15, characterized in that an elastic belt (70) is fitted to a site on the inner belts (5) in such a way that the inner belts (5) sag.

17. Reusable container for packing goods of all kinds according to one of the preceding claims, characterized in that, at the standing area (47) for the packaged goods (4) on the inner side (12) of the bottom tray, there are clamped in place in the indentations (39) rubber or synthetic strips (41), which are of semi-circular configuration in their cross section and are provided on their underside with lugs (40) matched to the indentations (39) and on which the packaged goods (4) stand, or the synthetic strips are jointly formed onto the inner side (12) of the base.

18. Reusable container for packing goods of all kinds according to one of Claims 1 to 16, characterized in that in the centre of the inner side (12) of the bottom tray there is provided a damping insert (42) which is matched to the packaged goods (4) and consists of synthetic material- and can be fastened to the base by means of detachable fasteners such as, for example, clamping fillets (43), push buttons or touch-and-close fasteners (4).

19. Reusable container for packing goods of all kinds according to one of Claims 1 to 16, characterized in that, at the standing area (47) for the packaged goods (4) on the inner side (12) of the bottom tray, there are provided humps (48) which protrude out of the bottom face and are disposed in a grid pattern.

20. Reusable container for packing goods of all kinds according to one of the preceding claims, characterized in that, on the inner side (12) of the bottom tray, preferably around the standing area (47) for the packaged goods (4), there are provided further indentations (46) which traverse almost the entire cavity (45) of the bottom tray (2) in terms of its depth.

21. Reusable container for packing goods of all kinds according to one of the preceding claims, characterized in that the outside top face (49) of the top tray (1) is configured in the same way as the inner sides (12) of the bottom tray.

22. Reusable container for packing goods of all kinds according to one of the preceding claims, characterized in that, on the top tray (1) above the grooves (13) in the outside top face (49), there are likewise disposed synthetic strips (76) of semi-circular cross section, and in that, at the same location on the outer surface (51) of the bottom tray, there are provided gulleys (52) which are profiled in accordance with the synthetic strips (76).

23. Reusable container for packing goods of all kinds according to one of the preceding claims, characterized in that, between the two outer synthetic strips (76) having a curved surface, there are fitted, on the outside top face (49) of the top tray (1), further synthetic strips (53) having a flat surface.

24. Reusable container for packing goods of all kinds according to one of the preceding claims, characterized in that the body (3) can be folded in a concertina-like manner around the vertical centre line (5) of a narrow side (55).

25. Reusable container for packing goods of all kinds according to one of the preceding claims, characterized in that the top (1) and bottom tray (2) preferably consist of synthetic material, such as polyethylene or polypropylene and the body (3) of cardboard.

## Revendications

1. Conteneur réutilisable pour l'emballage de produits de tous types, constitué notamment par une cuvette supérieure et une cuvette inférieure (1,2) comportant respectivement une rainure circonférentielle qui est ménagée dans les bords latéraux intérieurs, et une bague (3) formant les parois latérales et repliable après utilisation et qui, pendant l'utilisation, peut être enfichée dans les rainures circonférentielles (64) des deux cuvettes, ainsi que des moyens pour maintenir assemblés les trois éléments pendant leur utilisation, caractérisé par le fait qu'au moins une cuvette (1,2), de préférence la cuvette inférieure (2), est réalisée sous la forme d'un corps creux, que la fixation du produit à emballer (4) est réalisée au moyen d'une sangle intérieure imperdable (5), qui peut être tendue d'une manière continue et est fixée à la cuvette inférieure (2), et que les moyens servant à maintenir assemblés les trois éléments (1,2,3) sont fixés, après l'utilisation, sur l'une des cuvettes (1,2).

2. Conteneur réutilisable pour l'emballlage de produits de tous types suivant la revendication 1, caractérisé par le fait que la cavité (45) de la cuvette inférieure (2) est constituée par deux chambres séparées (78,79), dont la première (78) forme un anneau en forme de rebord sur la périphérie de la cuvette inférieure (2) et dont la seconde (79) forme la partie centrale entourée par la première forme (78) et dont le fond est cependant surélevé par rapport au fond de la première chambre (78) de sorte que la seconde chambre (79) possède une profondeur inférieure à celle de la première.

3. Conteneur réutilisable pour l'emballage de produits de tous types suivant l'une des revendications 1 ou 2, caractérisé par le fait que les moyens pour maintenir assemblés les trois éléments pendant l'utilisation sont constitués par des sangles extérieures (6), qui sont fixées, sur l'un de leur côté, dans des ouvertures (7) ménagées dans les parois latérales (8) de la cuvette inférieure (2) et sont pourvues sur leurs autres extrémités, d'un système de fermeture à serrage avec glissement ou patinage (9), pouvant être serré et débloqué.

4. Conteneur réutilisable pour l'emballage de produits de tous types suivant l'une des revendications 1 ou 2, caractérisé par le fait que les moyens pour maintenir assemblés les trois éléments pendant l'utilisation sont constitués par des surfaces de fermeture rabattables (89), qui sont réalisés en tant que partie des parois latérales (14) des deux cuvettes (1,2) et sont pourvus, au niveau de leur face intérieure, d'éléments tubulaires (15) disposés en série et qui s'engagent dans des premiers évidements (16) de la bague et peuvent être verrouillés au moyen de tiges enfichables déplaçables ou au moyen de verrous extérieurs (17).

5. Conteneur réutilisable pour l'emballage de produits de tous types suivant l'une des revendications 1 ou 2, caractérisé par le fait que les moyens pour assembler les trois éléments sont constitués par des barrettes coulissantes (56) suspendues élastiquement sur les côtés longitudinaux (58,59) de la cuvette supérieure (1) et de la cuvette inférieure (2), sur la face inférieure desquelles sont disposés les crochets (60), qui s'engagent, lors du déplacement, dans des évidements (16) de la bague (3).

6. Conteneur réutilisable pour l'emballage de produits de tous types suivant l'une des revendications 1 ou 2, caractérisé par le fait que les moyens pour maintenir assemblés les trois éléments sont constitués par des poussoirs (38) qui sont disposés sur les côtés longitudinaux (58,59) de la cuvette supérieure (1) et de la cuvette inférieure (2) et qui possèdent des verrous de blocage cylindriques sur leur côté arrière et qui, lors de la mise en place de la cuvette supérieure (1) et de la cuvette inférieure (2) sur la bague (3), s'engagent dans des coulisses conformées à angle droit (62).

7. Conteneur réutilisable pour l'emballage de produits de tous types suivant l'une des revendications 1 ou 2, caractérisé par le fait que les moyens pour maintenir assemblés les trois éléments pendant l'utilisation sont constitués par des surfaces de fermeture rabattables (80), qui sont formés en tant que parties des parois latérales (14) des deux cuvettes (1,2) et contiennent des parties rentrantes pouvant être enfoncées à partir de l'extérieur et qui s'encliquettent dans des premiers évidements (16) de la bague.

8. Conteneur réutilisable pour l'emballage de produits de tous types suivant l'une des revendications 1 ou 2, caractérisé par le fait que les moyens pour maintenir assemblés les trois éléments pendant l'utilisation sont constitués par des étriers en forme de U, qui sont montés de manière à pouvoir basculer sur la face extérieure de la cuvette supérieure et de la cuvette inférieure et qui s'encliquettent dans des seconds évidements ménagés dans les bords de la bague.

9. Conteneur réutilisable pour l'emballage de produits de tous types suivant l'une des revendications 1 ou 2, caractérisé par le fait que les moyens pour maintenir assemblés les trois éléments pendant l'utilisation sont constitués par des surfaces de fermeture rabattables (80) qui sont réalisées en tant que parties des parois latérales (14) de la cuvette supérieure (1) et de la cuvette inférieure (2) et qui sont équipés de systèmes de fermeture à pression (81), sur lesquels est formé, sur le côté arrière, un appendice saillant (82), qui lors du rabattement des surfaces de fermeture (80), traverse la bague (3) au niveau de passages respectivement préformés (83) et s'encliquette, par une partie en forme de bouton (84) également formée par moulage, dans une cavité d'encliquetage (85) ménagée dans la cuvette supérieure (1) ou dans la cuvette inférieure (2).

10. Conteneur réutilisable pour l'emballage de produits de tous types suivant l'une des revendications précédentes, caractérisé par le fait que sur deux côtés opposés de la cuvette supérieure sont fixées des poignées (21) rabattables sur 180° et qui possèdent, sur le côté tourné à l'opposé de la charnière de poignée (22), des moulures (23), qui s'engagent dans des fentes ménagées dans la paroi latérale (8) de la cuvette inférieure (2) ou s'engagent autour du bord inférieur (24) de la cuvette inférieure (2).

11. Conteneur réutilisable pour l'emballage de produits de tous types suivant l'une des revendications 8 et 10, caractérisé par le fait que l'extrémité non supportée de l'étrier en forme de U (19) entoure le bord inférieur (24) de la cuvette inférieure (2) et s'engage, par un bouton d'encliquetage (25) situé sur l'extrémité de l'étrier, dans un renfoncement (26) ménagé dans la face extérieure (27) de la cuvette inférieure (2).

12. Conteneur réutilisable pour l'emballage de produits de tous types suivant l'une des revendications précédentes, caractérisé par le fait que sur la face intérieure (12) de la cuvette inférieure sont disposés des renfoncements cylindriques (29) disposés suivant un réseau, qui ne s'étendent pas jusqu'au fond intérieur (28) de la cuvette inférieure (2) et dans lesquels peuvent être encliquetées les branches latérales (30) d'étriers de retenue (31,66) réalisés en forme de U et auxquels sont fixées, par une de leurs extrémités, les sangles intérieures (5), les autres extrémités des sangles intérieures (5) comportant des systèmes de fermeture réglables (32), ce qui permet de mettre sous tension les sangles intérieures (5).

13. Conteneur réutilisable pour l'emballage de produits de tous types suivant l'une des revendications 1 à 11, caractérisé par le fait que sur la face inférieure (12) de la cuvette inférieure sont disposés des renfoncements quadrangulaires (33), qui ne s'étendent pas jusqu'au fond à l'intérieur (28) de la cuvette inférieure (2) et qui se rétrécissent, au niveau de leur côté supérieur, grâce à la présence d'un bord saillant (34), et que dans ces renfoncements quadrangulaires (33) peuvent être encliquetés des dispositifs d'encliquetage de serrage (35) pourvus de becs (67) et auxquels sont fixées les extrémités des sangles intérieures (5), les autres extrémités des sangles intérieures (5) possédant des éléments de fermeture réglables (32), ce qui permet de serrer progressivement les sangles intérieures.

14. Conteneur réutilisable pour l'emballage de produits de tous types suivant l'une des revendications 1 à 11, caractérisé par le fait que le long de la périphérie de la face intérieure (12) de la cuvette inférieure s'étendent des glissières (11), dans lesquelles sont disposés, de manière à être déplaçables, des coulisseaux (10), qui sont reliés à des premières extrémités des sangles intérieures (5), les autres extrémités des sangles intérieures (5) possédant des systèmes de fermeture réglables, de sorte que les sangles intérieures (5) peuvent être tendues progressivement.

15. Conteneur réutilisable pour l'emballage de produits de tous types suivant l'une des revendications 1 à 11, caractérisé par le fait que dans le fond intérieur (28) de la cuvette inférieure (2) sont formées des barrettes (36) qui font salle vers le haut et sont pourvues de passages (37), dans lesquels sont fixées les premières extrémités des sangles intérieures (5), dont les autres extrémités possèdent des systèmes de fermeture réglables de sorte que les sangles intérieures (5) peuvent être tendues progressivement.

16. Conteneur réutilisable pour l'emballage de produits de tous types suivant l'une des revendications 12 à 15, caractérisé par le fait qu'une bande élastique (70) est disposée en un emplacement des sangles intérieures (5) de telle sorte que les sangles intérieures (5) sont dans une position pendante.

17. Conteneur réutilisable pour l'emballage de produits de tous types suivant l'une des revendications précédentes, caractérisé par le fait qu'à l'emplacement (47) de montage du produit à emballer (4), sur la face intérieure (12) de la cuvette inférieure sont serrées, dans les renfoncements (39), des barrettes en caoutchouc ou en matière plastique (41), qui sont réalisées avec une forme semi-circulaire en coupe transversale et comportent, au niveau de leur face inférieure, des appendices saillants (40) adaptés aux renfoncements (39), et sur lesquelles est situé le produit à emballer (4), ou bien les barrettes en matière plastique sont formées conjointement sur la face intérieure de base (12).

18. Conteneur réutilisable pour l'emballage de produits de tous types suivant l'une des revendications 1 à 16, caractérisé par le fait qu'au centre de la face intérieure (12) de la cuvette inférieure est prévu un insert d'amortissement (42) qui est adapté au produit à emballer (4), est réalisé en matière plastique et peut être fixé au fond par l'intermédiaire de systèmes de fermeture amovibles, comme par exemple des barrettes de serrage (43), des boutons-poussoirs ou des bandes adhésives (4).

19. Conteneur réutilisable pour l'emballage de produits de tous types suivant l'une des revendications 1 à 16, caractérisé par le fait qu'au niveau de l'emplacement (47) prévu pour la mise en place du produit à emballer (4), sur la face intérieure (12) de la cuvette inférieure il est prévu des bossages (48) qui font saillie à partir de la surface de fond et sont disposés sous la forme d'un réseau.

20. Conteneur réutilisable pour l'emballage de produits de tous types suivant l'une des revendications précédentes, caractérisé par le fait que sur la face intérieure (12) de la cuvette inférieure, de préférence autour de l'emplacement (47) de mise en place du produit à emballer (4) sont prévus d'autres renfoncements (46) qui s'étendent en profondeur presque sur toute la cavité (45) de la cuvette inférieure.

21. Conteneur réutilisable pour l'emballage de produits de tous types suivant l'une des revendications précédentes, caractérisé par le fait que la surface supérieure extérieure (49) de la cuvette supérieure (1) sont agencés de la même manière que les côtés intérieurs (12) de la cuvette inférieure.

22. Conteneur réutilisable pour l'emballage de produits de tous types suivant l'une des revendications précédentes, caractérisé par le fait que des barrettes en matière plastique (76) possédant une section transversale de forme semi-circulaire sont également disposées sur la cuvette inférieure (1), au-dessus des rainures (13) de la surface supérieure (49), et que des rainures (52) possédant un profil qui correspond à celui des barrettes en matière plastique (76), sont prévues au même emplacement de la surface supérieure extérieure (50) de la cuvette inférieure.

23. Conteneur réutilisable pour l'emballage de produits de tous types suivant l'une des revendications précédentes, caractérisé par le fait qu'entre les deux barrettes extérieures en matière plastique (76) possédant une surface cintrée, d'autres barrettes en matière plastique (53) possédant une surface plane sont disposées sur la surface supérieure extérieures (49) de la cuvette supérieure (1).

24. Conteneur réutilisable pour l'emballage de produits de tous types suivant l'une des revendications précédentes, caractérisé par le fait que la bague (3) peut être repliée à la manière d'un soufflet gonflable, autour de la ligne centrale verticale (5) d'un petit côté (55).

25. Conteneur réutilisable pour l'emballage de produits de tous types suivant l'une des revendications précédentes, caractérisé par le fait que la cuvette supérieure (1) et la cuvette inférieure (2) sont réalisées de préférence en matière plastique, tel que du polyéthylène ou du polypropylène, et le noyau (3) est réalisé en carton.
